# EUROPÄISCHE PATENTANMELDUNG

(11) **EP 1 260 168 A1**
(43) Veröffentlichungstag der Anmeldung: **27.11.2002**
(21) Anmeldenummer: 02010423.8
(22) Anmeldetag: 08.05.2002
(51) Int. Cl.: A47J 39/02

(54) **Küchenelement mit Warmhaltemittel**

(30) Priorität: 23.05.2001 DE 10125505
(71) Anmelder: ALNO Aktiengesellschaft, 88630 Pfullendorf (DE)
(72) Erfinder: Dahm-Wachsmann, Ulrich, 89075 Ulm (DE); Krietsch, Hans Joachim, 80939 München (DE)
(74) Vertreter: Patentanwälte Eisele, Otten, Roth & Dobler

(57) **Zusammenfassung**

Die Erfindung betrifft ein Küchenelement (2), insbesondere Unterschrank, Oberschrank, Vollschrank oder dergleichen.

Hierbei umfasst das Küchenelement (2) ein relativ gegenüber diesem horizontal verschiebbar angeordnetes und in diesem zumindest teilweise verstaubares Warmhaltemittel (9), wobei das Warmhaltemittel (9) eine Platte (15) umfasst, die zumindest bereichsweise beheizbar ist und wobei die Platte (15) in einer im Wesentlichen außerhalb des Küchenelements (2) liegenden Position (I) verwendbar ist.

## Beschreibung

Die Erfindung betrifft ein Küchenelement nach dem Oberbegriff des Anspruchs 1.

Aus der DE 43 37 363 C 1 ist beispielsweise ein Küchenmöbel mit Wärmefach bekannt. Das Wärmefach ist als in eine Küchenfront integrierbarer Küchenschrank ausgebildet, dessen Innenraum durch eine Klappe und einen Auszug zugänglich ist. Nachteilig an diesem Küchenmöbel ist, das zum Be- und Entladen immer die Klappe oder der Auszug bewegt werden muss.

Weiterhin ist aus der DE 31 51 148 A 1 eine elektrisch beheizte Warmhalteplatte bekannt. Nachteilig an einer solchen Platte ist, dass diese zumindest in Betrieb Stellfläche in der Küche verbraucht und nach dem Gebrauch immer sorgfältig darauf geachtet werden muss, dass nicht die noch heiße Wärmeplatte an einer Stelle verstaut wird, an der sie einen Brand verursachen kann.

Der Erfindung liegt die Aufgabe zu Grunde, in einer Küche eine optimal zugängliche, möglichst wenig Arbeitsfläche verbrauchende und ohne Brandgefahr verstaubare Warmhaltemöglichkeit zu schaffen.

Diese Aufgabe wird ausgehend von den Merkmalen des Oberbegriffs des Anspruchs 1 erfindungsgemäß durch die kennzeichnenden Merkmale des Anspruchs 1 gelöst. Durch die in den Unteransprüchen genannten Merkmale sind vorteilhafte Ausführungen und Weiterbildungen der Erfindung möglich.

Das erfindungsgemäße Küchenelement wirkt mit einem Warmhaltemittel zusammen, das relativ zu diesem in horizontaler Richtung verfahrbar ist und von diesem wenigstens teilweise aufgenommen ist, wobei das Warmhaltemittel eine Platte umfasst, die wenigstens bereichsweise beheizbar ist und in einer Position verwendbar ist, in der das Warmhaltemittel im Wesentlichen außerhalb des Küchenelements positioniert ist. Hierdurch ist es möglich auf einfache Weise in einer Küche eine Warmhalteplatte zum Einsatz zu bringen ohne hierfür auf herkömmliche Arbeitsfläche verzichten zu müssen und ohne auf diese nur nach dem Öffnen einer Klappe Zugriff zu haben. Weiterhin lässt sich ein derartiges Warmhaltemittel durch ein horizontales Verfahren in das Küchenelement einfach verstauen.

Gemäß einer vorteilhaften Ausbildung des Erfindungsgegenstandes ist es vorgesehen, die Platte insbesondere mit Gas und/oder Strom zu beheizen. Hierdurch kann für das Warmhaltemittel auf eine bereits in der Küche vorhandene Energieversorgung zugegriffen werden.

Gemäß einer besonderen Ausführungsform sieht die Erfindung vor, das Warmhaltemittel verschiebbar an wenigstens einer Seitenwange und/oder einer Traverse und/oder einem Boden und/oder einer Rückwand des Küchenelements anzuordnen. Hierdurch sind vielfältige, einfache Befestigungsmöglichkeiten für das Warmhaltemittel gegeben.

Weiterhin ist es vorteilhaft, das Warmhaltemittel an den Seitenwangen angeordneten Schienen zu führen. Hierdurch ist eine gute Abtragung der auf das Warmhaltemittel durch auf dieses aufgestellte Gegenstände wirkenden Gewichtskräfte sichergestellt.

Gemäß einer besonderen Ausführungsform des Erfindungsgegenstandes ist es vorgesehen, das Warmhaltemittel in der Breite und der Tiefe etwa einer Grundfläche des Küchenelements anzupassen. Hierdurch ist es möglich, den durch das Küchenelement vorgegebenen Bauraum optimal auszunutzen.

Gemäß einer besonderen Ausführungsform ist das Warmhaltemittel insbesondere um eine senkrecht stehende Achse aus dem Küchenelement ausdrehbar und in das Küchenelement eindrehbar. Hierdurch ist es möglich, beispielsweise auch großflächige, Küchenelemente übergreifende Warmhaltemittel auszubilden.

Eine vorteilhafte Ausbildung des Erfindungsgegenstandes sieht vor, dass Warmhaltemittel in einer innerhalb des Küchenelements liegenden Position in einem Fach bzw. Schacht des Küchenelements aufzunehmen, das insbesondere zu einer Frontseite des Küchenelements geöffnet ist und vorzugsweise etwa auf der Höhe der Arbeitsplatte liegt. Hierdurch ist die Anordnung des Warmhaltemittels in einer ergonomisch günstigen Position gegeben, die garantiert, dass sich das Warmhaltemittel in der außerhalb des Küchenelements liegenden Position immer auch im Blickbereich einer in der Küche arbeitenden Person liegt. Durch die Öffnung zur Frontseite des Küchenelements ist es möglich, das Warmhaltemittel auch im eingeschobenen Zustand ohne eine Gefahr der Überhitzung zu beheizen, da dieses über die Öffnung gut belüftet ist. Durch die Öffnung ist bei eingeschobenem Warmhaltemittel auch ein konstantes Entweichen von Dampf möglich.

Es ist von besonderem Vorteil, wenn das Warmhaltemittel plattenartig ausgestaltet ist und vorzugsweise von einem Rahmen und einem Einsatz gebildet ist, wobei die Platte den Einsatz bildet und wobei der Einsatz vorzugsweise aus dem Rahmen herausnehmbar und insbesondere durch einen weiteren Einsatz ersetzbar ist, wobei als weiterer Einsatz z. B. ein Schneidbrett oder eine Küchenmaschine einsetzbar ist. Hierdurch wird neben einer platzsparenden, geringen Bauhöhe des Warmhaltemittels auch die Möglichkeit gegeben, die Platte außerhalb des Einbauortes, bzw. in einer Spülmaschine zu reinigen und das Warmhaltemittel auch für andere Küchenarbeiten zu nutzen.

Weiterhin ist es vorgesehen, die Platte insbesondere aus wenigstens einer Glasplatte auszubilden und mit wenigstens einer unter und/oder in und/oder auf dieser angeordneten elektrisch betriebenen Heizfolie zu versehen. Hierdurch wird die Platte zu einem einfach herzustellenden, einfach zu reinigenden und in Bezug auf einzelne, herdplattenähnliche Heizzonen individuell auszugestaltbarem Gegenstand.

Eine zweckmäßige Ausgestaltung des Erfindungsgegenstandes sieht vor, den Rahmen vorzugsweise aus Metall auszubilden und mit wenigstens einem Bedienelement, insbesondere einem Schalter oder einem Regler für die Heizfolie vorzusehen, wobei dem Rahmen insbesondere auch eine Temperaturanzeige zugeordnet ist. Hierdurch ist eine hohe Stabilität und eine einfache Reinigung des Rahmens gegeben. Weiterhin ist eine einfache, leicht verständliche Bedienbarkeit des Warmhaltemittels gewährleistet, da Anzeige- und Bedienelement dem zu bedienenden Gegenstand unmittelbar zugeordnet sind.

Eine besondere Ausgestaltung des Erfindungsgegenstandes sieht vor, das Küchenelement im Bereich des Warmhaltemittels mit einem Wärme reflektierenden Material auszukleiden. Hierdurch werden Schäden am Küchenelement und eine Brandgefahr durch ein heißes Warmhaltemittel, das sich in der eingeschobenen Position befindet, mit wenig Aufwand vermieden.

Weiterhin ist es vorgesehen, das Warmhaltemittel im Bereich einer Heizfläche bzw. der Platte mit Ausnehmungen und/oder Erhebungen für zu beheizende Gegenstände zu versehen. Hierdurch ist ein Verrutschen bzw. Verschieben der Gegenstände auf dem Warmhaltemittel vermieden und eine eindeutige Zuordnung der Gegenstände zu bestimmten Bereichen des Warmhaltemittels gewährleistet. Dies ist insbesondere dann von Vorteil, wenn unterschiedliche Bereiche der Platte auf unterschiedliche Temperaturen aufgeheizt werden.

Eine weitere zweckmäßige Ausgestaltung des Erfindungsgegenstandes sieht vor, das Warmhaltemittel in nicht beheiztem Zustand als Ablagefläche bzw. Abstellfläche vorzusehen. Hierdurch ist es möglich, die Arbeits- bzw. Ablagefläche in einer Küche bei Bedarf zu erweitern.

Schließlich sieht die Erfindung vor, das Warmhaltemittel in einer innerhalb bzw. teilweise innerhalb des Küchenelements liegenden Position zum Vorwärmen von Geschirr und Warmhalten von Speisen zu verwenden. Hierdurch wird eine zu große Wärmeabgabe an die Umgebung durch das zumindest bereichsweise als Abdeckung wirkende Küchenelement vermieden. Weiterhin ist in einer solchen Position des Warmhaltemittels der Zugriff auf eine gegebenenfalls über diesem liegende Arbeitsplatte erleichtert.

Eine zweckmäßige Ausgestaltung des Erfindungsgegenstandes sieht noch vor, das Warmhaltemittel als Wagen bzw. Container auszubilden, der auf Rädern und/oder Gleitern auf einem Küchenboden verfahrbar ist und der eine Oberseite aufweist, die durch eine beheizbar Platte gebildet ist, und/oder bei dem die Platte schubladenähnlich ausziehbar aufgehängt ist. Durch eine derartige Anordnung ist eine freie Verfügbarkeit des Warmhaltemittels in der gesamten Küche bzw. auch außerhalb der Küche möglich.

Weitere Einzelheiten der Erfindung werden in der Zeichnung anhand von schematisch dargestellten Ausführungsbeispielen beschrieben.

Hierbei zeigt:
- Figur 1: eine Ansicht einer Einbauküche,
- Figur 2: eine Seitenansicht eines Küchenelements,
- Figur 3: Küchenelemente mit einem Schacht für ein Warmhaltemittel,
- Figur 4: eine Draufsicht auf die in Figur 3 dargestellten Küchenelemente mit teilweise ausgezogenem Warmhaltemittel,
- Figur 5: eine weitere Draufsicht auf die in Figur 3 dargestellten Küchenelemente mit einem ausdrehbaren Warmhaltemittel,
- Figur 6: eine Draufsicht auf weitere Küchenelemente mit einem Küchenelemente übergreifenden Warmhaltemittel,
- Figur 7: eine Seitenansicht eines Wagens,
- Figur 8: einen weiteren Wagen, der einem u-förmigen Küchenelement zugeordnet ist,
- Figur 9: eine perspektivische Ansicht zweier Warmhaltemittel, die Küchenelementen zugeordnet sind und
- Figur 10: eine perspektivische Ansicht eines an Schienen verschiebbaren Warmhaltemittels.

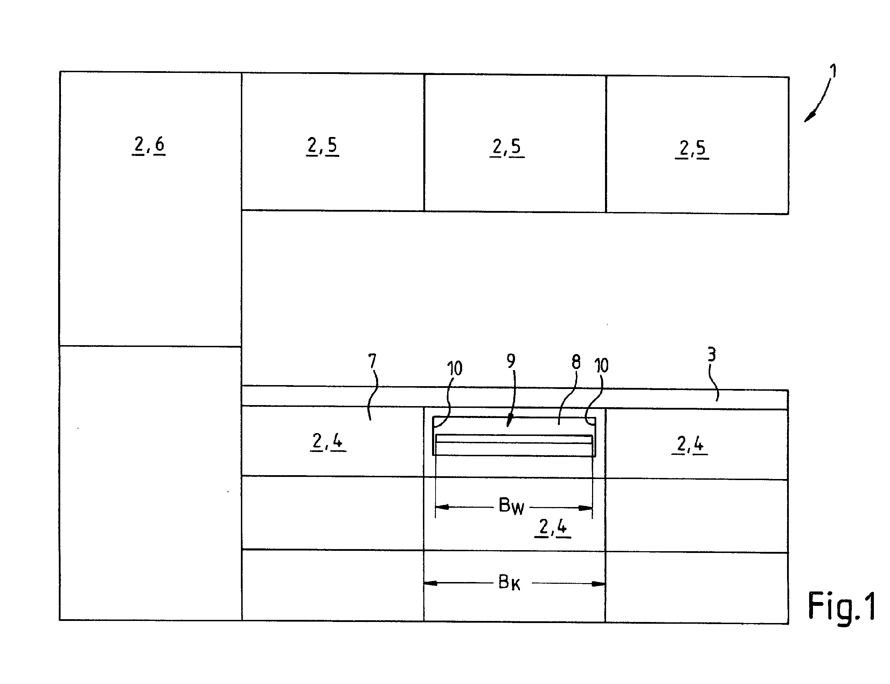

In Figur 1 ist eine Einbauküche 1 dargestellt, die sich im Wesentlichen aus einzelnen Küchenelementen 2 und einer Arbeitsplatte 3 zusammensetzt. Die Küchenelemente 2 sind als Unterschränke 4, Oberschränke 5 und Vollschrank 6 ausgebildet. In einem zu einer Frontseite 7 der Einbauküche 1 geöffneten, offenen Fach 8 eines der Küchenelemente 2 ist ein Warmhaltemittel 9 angeordnet. Das Warmhaltemittel 9 ist an Seitenwangen 10 des Unterschranks 4 verschiebbar bzw. ausziehbar und einschiebbar befestigt. Das Warmhaltemittel 9 weist eine Breite B_{W} auf, die im Wesentlichen einer Breite B_{K} des Küchenelements 2 entspricht bzw. geringfügig kleiner als diese ist.

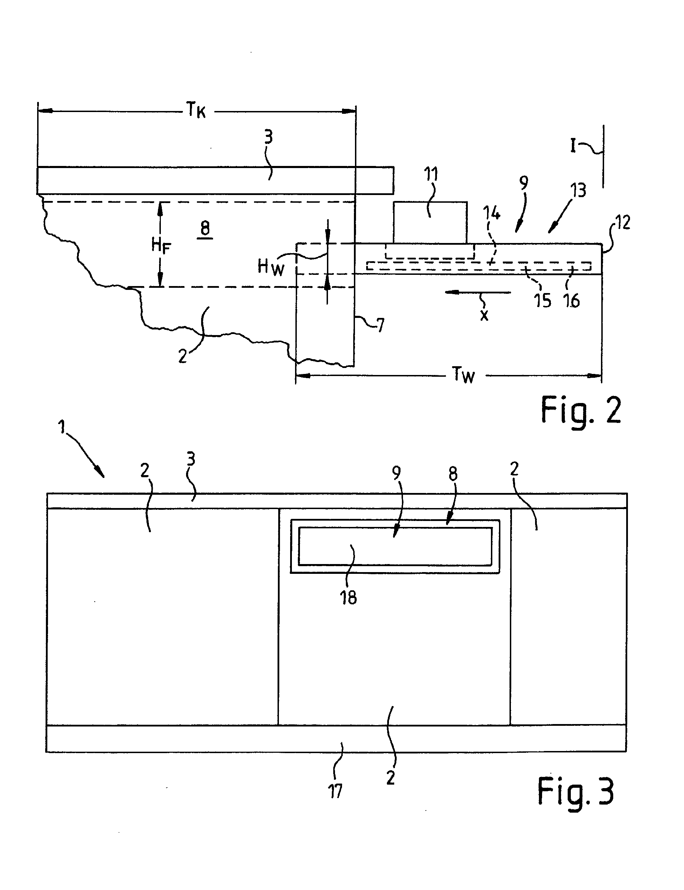

Figur 2 zeigt eine Seitenansicht eines Küchenelements 2 mit einer auf diesem aufliegenden Arbeitsplatte 3 und einem über eine Frontseite 7 des Küchenelements 2 hinausstehenden, vollständig ausgezogenen Warmhaltemittel 9. Das Warmhaltemittel 9 befindet sich somit in einer außerhalb des Küchenelements 2 liegenden Position I, in der es für das Abstellen eines Gefäßes 11 zur Verfügung steht. Das Warmhaltemittel ist in Richtung eines Pfeils x horizontal in das Küchenelement 2 in eine nicht dargestellte innerhalb des Küchenelements liegende Position II einschiebbar, wobei dann eine Frontseite 12 des Warmhaltemittels 9 mit der Frontseite 7 des Küchenelements 2 abschließt oder hinter dieser zurücktritt. Das Warmhaltemittel 9 setzt sich aus einem Rahmen 13 und einem in diesen eingesetzten Einsatz 14 zusammen. Der Einsatz 14 ist als beheizbare Platte 15 ausgebildet, die vorzugsweise durch eine Glasplatte 16 gebildet ist. Das Warmhaltemittel 9 weist eine Tiefe T_{W} auf, die etwa einer Tiefe T_{K} des Küchenelements 2 entspricht bzw. geringfügig kleiner als diese ist. Mit gestrichelten Linien ist ein Fach 8 im Küchenelement 2 angedeutet, in welches das Warmhaltemittel 9 einschiebbar ist. Das Fach 8 besitzt eine Höhe H_{F}, die größer ist als eine Höhe H_{W} des Warmhaltemittels 9.

Figur 3 zeigt einen Ausschnitt einer Küche 1 mit mehreren Küchenelemente 2, die von einer Arbeitsplatte 3 abgedeckt sind, und einer Fußbodenleiste 17. In einem unterhalb der Arbeitsplatte 3 liegenden Fach 8 des mittleren Küchenelements 2 ist ein Warmhaltemittel 9 aufgenommen. Das Warmhaltemittel 9 weist eine Blende 18 auf, welche das Fach 8 des mittleren Küchenelements 2 in einer innerhalb des Küchenelements 2 liegenden Position des Warmhaltemittels 9 teilweise abdeckt.

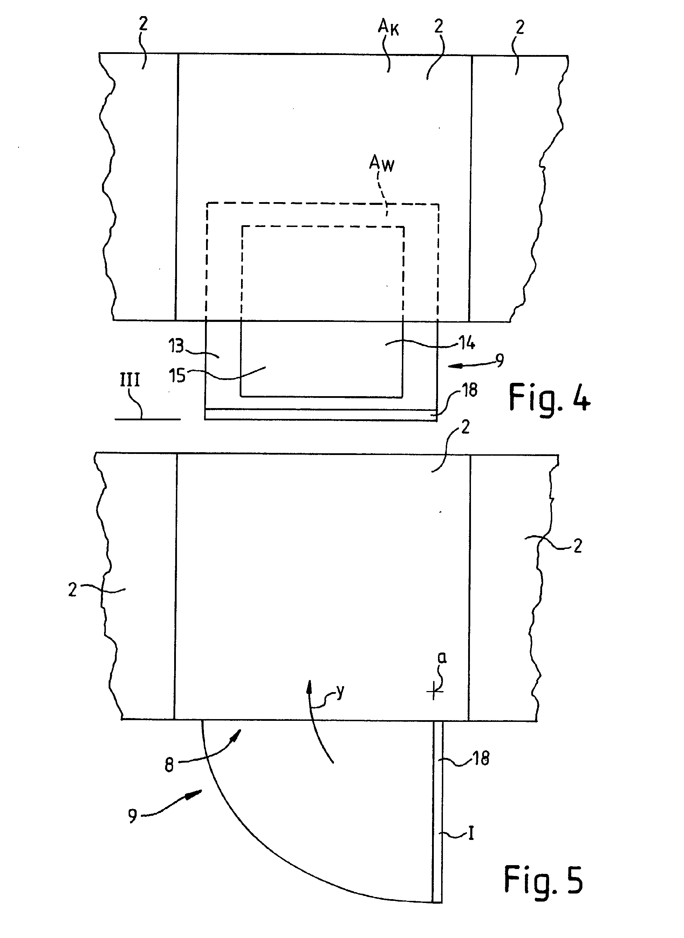

Figur 4 zeigt eine Draufsicht auf die in Figur 3 dargestellten Küchenelement 2, wobei das Warmhaltemittel 9 im Unterschied zu Figur 3 in einer teilweise außerhalb des Küchenelements 2 liegenden Position III steht. Im Wesentlichen ist das Warmhaltemittel 9 durch einen Rahmen 13 gebildet, der einen Einsatz 14 aufnimmt, wobei der Einsatz 14 als beheizbare Platte 15 ausgebildet ist. Die Blende 18 ist ein Bestandteil des Rahmens 13. Gemäß einer nicht dargestellten Ausführungsvariante ist die Blende mit dem Rahmen durch Schrauben oder Steckverbindungen verbunden und im Design der Küche ausgeführt Eine Grundfläche A_{K} des mittleren Küchenelements 2 entspricht in etwa einer Grundfläche A_{W} des Warmhaltemittels 9, wobei A_{W} etwas kleiner als A_{K} ist.

Figur 5 zeigt eine weitere Draufsicht auf die in Figur 3 gezeigten Küchenelemente 2 mit einer Ausführungsvariante eines Warmhaltemittels 9. Dieses Warmhaltemittel 9 ist aus dem Fach 8 um eine senkrecht in die Zeichenebene verlaufende Achse a drehbar ausgebildet. In Figur 5 ist das Warmhaltemittel 9 in einer außerhalb des Küchenelements 2 liegenden Position I dargestellt. Ein Zurückfahren des Warmhaltemittels 9 in eine nicht dargestellte, innerhalb des Küchenelements 2 liegende Position II, erfolgt durch eine Drehung des Warmhaltemittels 9 um die Drehachse a in Pfeilrichtung y. In dieser nicht dargestellten Position ist dann das Fach 8 durch die Blende 18 verdeckt.

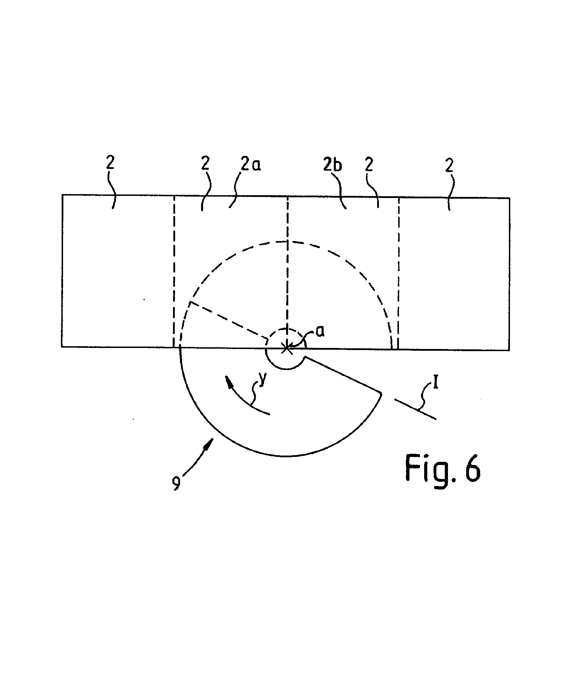

Figur 6 zeigt eine Draufsicht auf vier Küchenelemente 2, wobei zwei Küchenelemente 2a, 2b ein kreissegmentförmiges Warmhaltemittel aufnehmen, das in einer außerhalb der Küchenelemente 2a, 2b liegenden Position I dargestellt ist. In dieser Position I verbindet das Warmhaltemittel 9 die Küchenelemente 2a, 2b weitgehend. Durch eine Drehung in Pfeilrichtung y um eine senkrecht in die Zeichnungsebene verlaufende Drehachse a erfolgt ein Eindrehen des Warmhaltemittels 9 in die Küchenelemente 2a, 2b.

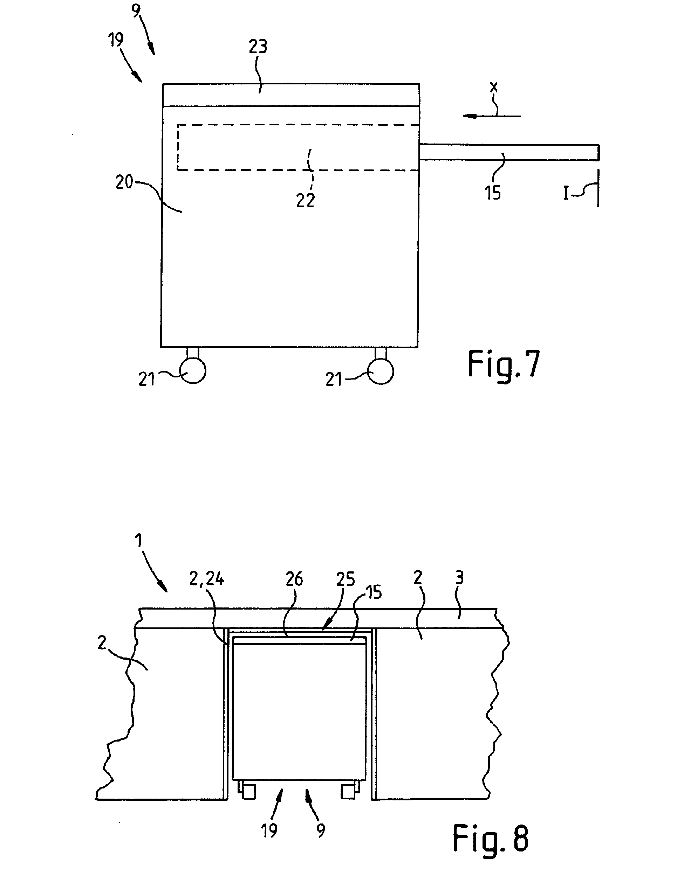

Figur 7 zeigt ein weiteres Warmhaltemittel 9, das als Wagen 19 ausgeführt ist, der sich im Wesentlichen aus einem Container 20 mit Rädern 21, einem Fach 22, einer beheizbaren Platte 15 und einer Arbeitsplatte 23 zusammensetzt. Die beheizbare Platte 15 ist in einer vollständig ausgezogenen Position I dargestellt und in eine Pfeilrichtung x in das Fach 22 einfahrbar.

Figur 8 zeigt einen Ausschnitt einer Einbauküche 1, von der drei Küchenelemente 2 dargestellt sind, die von einer Arbeitsplatte 3 überdeckt sind. Das mittlere Küchenelement 2 ist als u-förmiges, tunnelartiges Küchenelement 24 ausgebildet, das eine Garage 25 bildet, in welche ein Warmhaltemittel 9 eingefahren ist, das als Wagen 19 ausgebildet ist. Das Warmhaltemittel 9 bzw. der Wagen 19 besitzt an einer Oberseite 26 eine beheizbare Platte 15. Durch ein Herausfahren des Wagens 19 aus der Garage 25 ist die beheizbare Platte 15 in eine außerhalb des Küchenelements 24 liegende nicht dargestellte Position verfahrbar, in welcher das Warmhaltemittel 9 dann verwendbar ist. Es ist ebenfalls vorgesehen, das in Figur 7 dargestellte Warmhaltemittel in der in Figur 8 dargestellten Einbauküche 1 unterzubringen. Hierbei ist für einen Einsatz des Warmhaltemittels 9 im Küchenbetrieb lediglich das Herausziehen der beheizten Platte 15 aus dem Fach 22 erforderlich. Ein Verfahren des Wagens 19 erfolgt nur dann, wenn eine weitergehende Veränderung der Position des Warmhaltemittels 9 gefordert ist. Gemäß einer nicht dargestellten Ausführungsvariante ist ein als Wagen ausgebildetes Warmhaltemittel vorgesehen, das an einer Oberseite eine beheizbare Platte aufweist und weiterhin wenigstens ein Fach aufweist, aus dem eine beheizbare Platte ausziehbar ist. Eine weitere nicht dargestellte Ausführungsvariante sieht vor, dass eine beheizbare Platte in unterschiedliche Richtungen aus dem Warmhaltemittel ausziehbar ist bzw. dass das Warmhaltemittel mehrere beheizbare Platten aufweist, welche in verschiedene Richtungen aus diesem ausziehbar sind.

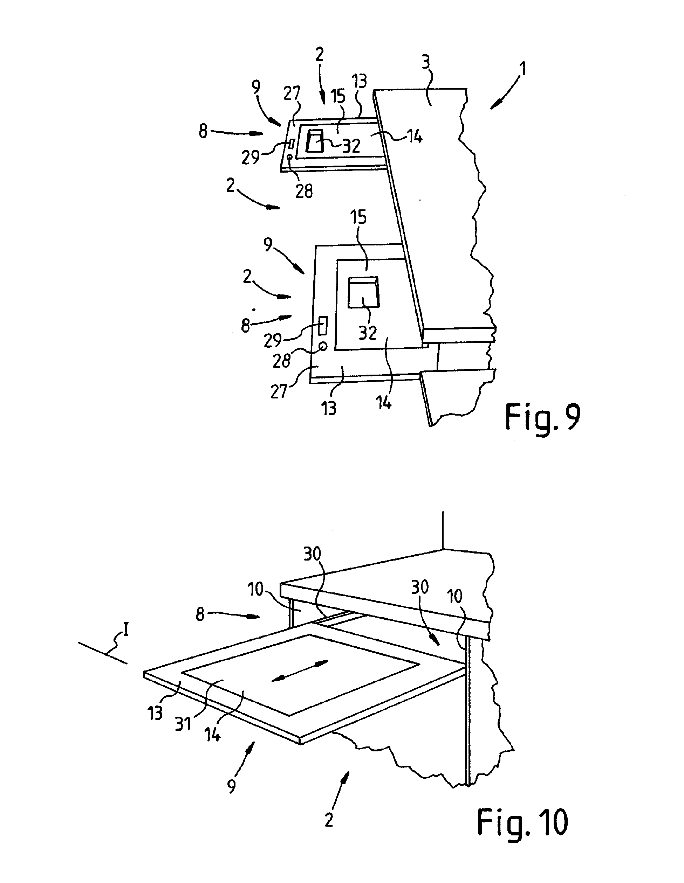

Figur 9 zeigt eine perspektivische Ansicht eines Ausschnitts einer Einbauküche 1, die unter einer Arbeitsplatte 3 nicht weiter zu sehende Küchenelemente 2 aufweist, welche zwei Fächer 8 besitzen, in denen Warmhaltemittel 9 angeordnet sind. Die Warmhaltemittel 9 bestehen aus einem Rahmen 13 und einem Einsatz 14, der als beheizbare Platte 15 ausgebildet ist. An einer Oberseite 27 der Rahmen 13 ist ein Bedienelement 28 angeordnet, das bei der elektrisch beheizbaren Platte 15 zum Ein- bzw. Ausschalten dient. Weiterhin sind an den Rahmen 13 Anzeigemittel 29 vorgesehen, an denen die Temperatur der Platten 15 ablesbar ist. Die Platten 15 weisen Vertiefungen 32 auf, in die nicht dargestellte Gefäße z.B. Teller einstellbar sind. Diese Vertiefungen sichern die Gefäße vor einem Verrutschen und erleichtern das sichere Abstellen.

Figur 10 zeigt eine weitere perspektivische Darstellung eines Küchenelements 2, das ein Fach 8 aufweist, an dessen Seitenwangen 10 Schienen 30 angeordnet sind, in denen ein Warmhaltemittel 9 geführt ist. Das Warmhaltemittel 9 besteht aus einem Rahmen 13 und einem in diesen einsetzbaren Einsatz 14, wobei der Einsatz 14 als Schneidbrett 31 ausgeführt ist, das gegen eine nicht dargestellte beheizbare Platte ausgetauscht wurde. Gemäß einer nicht dargestellten Ausführungsvariante ist es vorgesehen, den Einsatz auf einer Seite als beheizbare Platte und auf einer gegenüberliegenden Seite als Schneidbrett auszubilden. Beim Einsatz einer Glasplatte als beheizbare Platte ist es auch möglich, diese als Schneidbrett zu verwenden, wenn eine die Glasplatte beheizende Heizfolie nicht auf deren Oberfläche angebracht ist.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche. Insbesondere sieht die Erfindung auch vor, den Einsatz gegen eine Küchenmaschine auszutauschen.

### Bezugszeichenliste:

- 1: Einbauküche
- 2: Küchenelement
- 3: Arbeitsplatte
- 4: Unterschrank
- 5: Oberschrank
- 6: Vollschrank
- 7: Frontseite (von 1 bzw. 2)
- 8: Fach (von 2)
- 9: Warmhaltemittel
- 10: Seitenwange
- 11: Gefäß
- 12: Frontseite (von 9)
- 13: Rahmen (von 9)
- 14: Einsatz (von 9)
- 15: beheizbare Platte (von 9)
- 16: Glasplatte
- 17: Fußbodenleiste
- 18: Blende
- 19: Wagen
- 20: Container
- 21: Rad
- 22: Fach (von 19 bzw. 20)
- 23: Arbeitsplatte
- 24: u-förmiges Küchenelement
- 25: Garage
- 26: Oberseite (von 19)
- 27: Oberseite (von 13)
- 28: Bedienelement
- 29: Anzeigemittel
- 30: Schiene
- 31: Schneidbrett
- 32: Vertiefung

## Patentansprüche

1. Küchenelement (2), insbesondere Unterschrank (4), Oberschrank (5), Vollschrank (6) oder dergleichen, **dadurch gekennzeichnet, dass** das Küchenelement (2, 24) ein relativ gegenüber diesem horizontal verschiebbar angeordnetes und in diesem zumindest teilweise verstaubares Warmhaltemittel (9, 19) umfasst, wobei das Warmhaltemittel (9, 19) eine Platte (15) umfasst, die zumindest bereichsweise beheizbar ist, wobei die Platte (15) in einer im Wesentlichen außerhalb des Küchenelements (2, 24) liegenden Position (1) verwendbar ist.

2. Küchenelement nach Anspruch 1, **dadurch gekennzeichnet, dass** die beheizbare Platte (15) insbesondere mit Strom und/oder mit Gas beheizbar ist.

3. Küchenelement nach einem der vorhergehenden Ansprüche, **dadurch gekennzeichnet, dass** das Warmhaltemittel (9) verschiebbar an wenigstens einer Seitenwange (10) und/oder einer Traverse und/oder einem Boden und/oder einer Rückwand des Küchenelements (2) angeordnet ist.

4. Küchenelement nach einem der vorhergehenden Ansprüche, **dadurch gekennzeichnet, dass** das Warmhaltemittel (9) an an den Seitenwangen (10) angeordneten Schienen (30) verfahrbar ist.

5. Küchenelement nach einem der vorhergehenden Ansprüche, **dadurch gekennzeichnet, dass** das Warmhaltemittel (9, 19) in einer Breite (B_{W}) und einer Tiefe (T_{W}) etwa einer Grundfläche (A_{K}) des Küchenelements (2) entspricht.

6. Küchenelement nach einem der vorhergehenden Ansprüche, **dadurch gekennzeichnet, dass** das Warmhaltemittel (9) insbesondere um eine vertikale Achse (a) aus dem Küchenelement (2) ausdrehbar und in das Küchenelement (2) eindrehbar ist.

7. Küchenelement nach einem der vorhergehenden Ansprüche, **dadurch gekennzeichnet, dass** das Warmhaltemittel (9) in einem Fach (8) bzw. Schacht (25) des Küchenelements (2) aufgenommen ist, das vorzugsweise zu einer Frontseite (7) des Küchenelements (2) geöffnet ist und vorzugsweise unterhalb einer Arbeitsplatte (3) oder auf einer Arbeitshöhe angeordnet ist.

8. Küchenelement nach einem der vorhergehenden Ansprüche, **dadurch gekennzeichnet, dass** das Warmhaltemittel (9) plattenartig ausgeführt ist und vorzugsweise aus einem Rahmen (13) und einem Einsatz (14) besteht, der durch die beheizbare Platte (15) gebildet ist und vorzugsweise aus dem Rahmen (13) entnehmbar und insbesondere durch einen weiteren Einsatz, vorzugsweise ein Schneidbrett (31) oder eine Küchenmaschine ersetzbar ist.

9. Küchenelement nach einem der vorhergehenden Ansprüche, **dadurch gekennzeichnet, dass** die beheizbare Platte (15) insbesondere aus wenigstens einer Glasplatte (16) ausgebildet ist und mit wenigstens einer unter oder in oder auf dieser angeordneten Heizfolie versehen ist.

10. Küchenelement nach Anspruch 8, **dadurch gekennzeichnet, dass** der Rahmen (13) vorzugsweise aus Metall besteht und ein Bedienelement (28), insbesondere einen Schalter oder einen Regler für die Heizfolie aufweist.

11. Küchenelement nach einem der vorhergehenden Ansprüche, **dadurch gekennzeichnet, dass** das Küchenelement (2, 24) im Bereich des Warmhaltemittels (9, 19) mit einem Wärme reflektierenden Material ausgekleidet ist.

12. Küchenelement nach einem der vorhergehenden Ansprüche, **dadurch gekennzeichnet, dass** das Warmhaltemittel (9) im Bereich der beheizbaren Platte (15) Vertiefungen (32) für zu beheizende Gefäße (11), insbesondere Teller, Schüsseln, Tassen und Töpfe aufweist.

13. Küchenelement nach einem der vorhergehenden Ansprüche, **dadurch gekennzeichnet, dass** das Warmhaltemittel (9) im nicht beheizten Zustand als Ablagefläche vorgesehen ist.

14. Küchenelement nach einem der vorhergehenden Ansprüche, **dadurch gekennzeichnet, dass** das Warmhaltemittel (9) in einer innerhalb bzw. teilweise innerhalb des Küchenelements (2, 24) liegenden Position (II, III), insbesondere für ein Vorwärmen von Geschirr und ein Warmhalten von Speisen verwendbar ist.

15. Küchenelement nach einem der vorhergehenden Ansprüche, **dadurch gekennzeichnet, dass** das Warmhaltemittel (9) als Wagen (19) ausgebildet ist, der eine Oberseite (26) aufweist, die wenigstens bereichsweise durch die beheizbare Platte (15) gebildet ist und/oder bei dem die beheizbare Platte (15) schubladenähnlich ausziehbar ist.
